# EUROPEAN PATENT APPLICATION

(11) **EP 4 727 137 A1**
(43) Date of publication of application: **15.04.2026**
(21) Application number: 24818745.2
(22) Date of filing: 06.06.2024
(51) Int. Cl.: H04N 21/2187

(54) **LIVE-STREAMING ROOM INTERACTION METHOD AND APPARATUS, AND DEVICE AND STORAGE MEDIUM**

(30) Priority: 06.06.2023 CN 202310674711
(71) Applicant: Lemon Inc., Grand Cayman, KY1-1205 (KY); Beijing Zitiao Network Technology Co., Ltd., Beijing 100190 (CN)
(72) Inventor: DONG, Shiwei, Beijing 100028 (CN); LIU, Yan, Beijing 100028 (CN)
(74) Representative: Isarpatent
(86) International application number: PCT/CN2024/097842
(87) International publication number: WO 2024/251214

(57) **Abstract**

Embodiments of the disclosure provide a method, an apparatus, a device and a storage medium for live streaming room interaction. The method incuding: acquiring configuration information on an interactive event in a live streaming room from a live streamer, the configuration information at least indicating a set of users in the live streaming room participating in the interactive event and an order in which the set of userss become an active participant in the interactive event; and starting the interactive event in the live streaming room based on the configuration information, where during the interactive event, a display style of a live streaming interface of the live streaming room dynamically changes based on the configuration information to indicate a change of an active participant in the interactive event. Therefore, the live streaming room is empowered to facilitate interactive events involving multiple users, so that the interaction experience in the live streaming room is enhanced.

## Description

**This** application claims the priority of Chinese Patent Application No. 2023106747116, filed on June 06, 2023, entitled "METHOD, APPARATUS, DEVICE AND STORAGE MEDIUM FOR LIVE STREAMING ROOM INTERACTION", the entire contents of which are incorporated herein by reference.

### FIELD

Example embodiments of the present disclosure generally relate to the field of computers, and in particular, to a method, an apparatus, a device, and a computer-readable storage medium for live streaming room interaction.

### BACKGROUND

With the development of computer technologies, more and more applications can provide live streaming functions. During a live streaming session, a streamer user can interact with the audience users, hence attracting more audience users, and improving the live streaming experience of the audiences. For example, some live streaming rooms support creation of interactive events (for example, a co-streaming activity of live streaming room), and a user can participate in an interactive event initiated by the streamer. The streamer may configure the interactive event in the live streaming room, and the streamer, users participating in the interactive event, and other users viewing the live streaming room may interact with each other through audio and video in the live streaming room.

### SUMMARY

**In** a first aspect of the present disclosure, a method for live streaming room interaction is provided. The method including: acquiring configuration information on an interactive event in a live streaming room from a live streamer, the configuration information at least indicating a set of users in the live streaming room participating in the interactive event and an order in which the set of users become an active participant in the interactive event; and starting the interactive event in the live streaming room based on the configuration information, where during the interactive event, a display style of a live streaming interface of the live streaming room dynamically changes based on the configuration information to indicate a change of an active participant in the interactive event.

In a second aspect of the present disclosure, an apparatus for live streaming room interaction is provided. The apparatus including: a configuration information acquiring module, configured to acquire configuration information on an interactive event in a live streaming room from a live streamer, the configuration information at least indicating a set of users in the live streaming room participating in the interactive event and an order in which the set of users become an active participant in the interactive event; and an interactive event starting module, configured to start interactive event in the live streaming room based on the configuration information, where during the interactive event, a display style of a live streaming interface of the live streaming room dynamically changes based on the configuration information to indicate a change of an active participant in the interactive event.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform a method of the first aspect.

In a fourth aspect of the present disclosure, a computer-readable storage medium is provided. The computer-readable storage medium stores thereon a computer program executable by a processor to implement a method of the first aspect.

It should be understood that the contents described in this summary section are not intended to limit any or all key features or important features of the embodiments of the present disclosure, nor are they intended to limit the scope of the present disclosure. Other features of the present disclosure will become readily understandable in light of the following descriptions.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, in which:
FIG. 1 illustrates a schematic diagram of an example environment in which embodiments of the present disclosure can be implemented;
FIG. 2A to FIG. 2I illustrate schematic diagrams of multiple example interfaces of a live streaming room according to some embodiments of the present disclosure;
FIG. 3A to FIG. 3C illustrate schematic diagrams of multiple example interfaces according to some embodiments of the present disclosure;
FIG. 4A to FIG. 4D illustrate schematic diagrams of multiple example interfaces according to some other embodiments of the present disclosure;
FIG. 5 illustrates a flowchart of a process for live streaming room interaction according to some embodiments of the present disclosure;
FIG. 6 illustrates a block diagram of an apparatus for live streaming room interaction according to some embodiments of the present disclosure; and
FIG. 7 illustrates a block diagram of an electronic device capable of implementing various embodiments of the present disclosure.

### DETAILED DESCRIPTION

It is to be understood that, prior to implementing the technical solutions disclosed in the embodiments of the present disclosure, a user must be properly made aware of, in manners as stipulated in relevant rules and regulations, any and/or all personal information, in relation to the types, scopes and scenarios of usage and/or the like, that may be needed in the present disclosure, and authorization by the user must be secured.

For example, in response to receiving an active request from the user, prompt information is sent to the user to explicitly prompt the user that the requested operation will need to acquire and use personal information of the user. Therefore, the user should be free to choose whether to provide personal information to the software or hardware executing the operations for the technical solution of the present disclosure according to the prompt information.

As an optional but non-limiting implementation, in response to receiving an active request from the user, the prompt information may be sent to the user in the form of, e.g., a pop-up window in which the prompt information is presented as texts. In addition, the pop-up window may further carry a selection control for the user to choose "agree" or "disagree" to provide personal information to the electronic device.

It is to be understood that the foregoing process of prompting for and obtaining user authorization is merely illustrative, and does not constitute any limitation on implementations of the present disclosure. Rather, any other manners fulfilling related laws, regulations and rules may also be applied to implementations of the present disclosure.

It is to be understood that the data involved in the technical solution (including but not limited to the data itself, the acquisition or use of the data) should follow the requirements of the corresponding laws and regulations and related rules.

The term "in response to" as used herein implies a state in which the relevant event has occurred or the relevant condition has been satisfied. It will be appreciated that the timing of execution of a subsequent action performed "in response to" the event or condition is not necessarily strongly correlated with the timing at which the event occurs or the condition holds. For example, in some cases, subsequent actions may be performed immediately when an event occurs or a condition holds, while in other cases, subsequent actions may be performed after a period of time have elapsed after the event occurs or the condition holds.

Embodiments of the present disclosure will be described in more detail below with reference to the accompanying drawings. While certain embodiments of the present disclosure have been shown in the accompanying drawings, it should be understood that the present disclosure may be implemented in various forms, and should not be construed as limited to the embodiments set forth herein. Rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments have been described at various instances in the entire text, and any type of embodiments may be included in any section/subsection. Furthermore, the embodiments described in any section/subsection may be combined in any manner with any other embodiment described the same or different sections/subsections.

In the description of the embodiments of the present disclosure, the terms "including" and the like should be understood to encompass "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As mentioned briefly above, in live streaming scenarios, users expect to be able to obtain richer forms of interaction. In particular, for the audience users, some audience users may expect to be able to see audio and video interactions of a plurality of users in a live streaming room, for example, a plurality of live streamers putting on performances in the same live streaming room.

Some conventional solutions may support a live streamer to invite a plurality of users to provide a live co-streaming interaction. For example, a live streamer invites several users to participate in the live co-streaming interaction and have them "on stage" in turns. However, limited by the fact that the live streamer and the users in the interaction are all participating online, the live streamer could have a hard time controlling the scene, such as arranging the order for the plurality of users to participate in the interaction, managing their performance time durations, and the like. These will increase the administrative cost of the live streaming room interactive events and may negatively affect the user's experience in the interactive event.

Therefore, embodiments of the present disclosure provide a solution for live streaming room interactions. According to various embodiments of the present disclosure, configuration information on an interactive event in a live streaming room is acquired, the configuration information at least indicating a set of users in the live streaming room participating in the interactive event and an order in which the set of users become an active participant in the interactive event. The interactive event is initiated according to the configuration information. During the interactive event, the display style of the live streaming interface of the live streaming room dynamically changes according to the configuration information to indicate a change of an active participant in the interactive event. Such an "active participant" may include, for example, a participant assigned with a preset permission (e.g., a permission to turn on mic or share a video) during the interactive event.

In this way, the embodiments of the present disclosure can support a streamer to organize in a live streaming room an interaction form in which multiple users may take turns to interact with the viewers, hence improving their interaction experience in the live streaming room. In addition, compared with traditional audio and video dialogues, these interactive sessions further encourage user interactions in the live streaming room, with reduced management cost of the interactive event in the live streaming room, and improved efficiency in managing the interactive event.

Example embodiments of the present disclosure will be described below with reference to the accompanying drawings.

### Example Environment

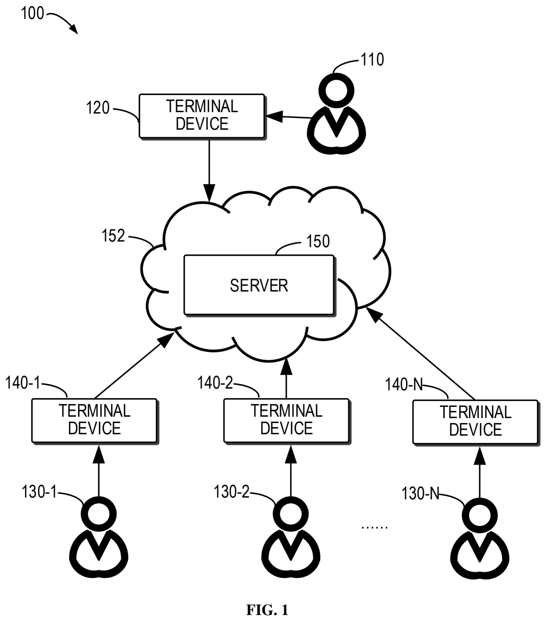

FIG. 1 illustrates a schematic diagram of an example environment 100 in which embodiments of the present disclosure can be implemented. In the environment 100, the user 110 may establish a live streaming room and provide live content and the like through an associated terminal device 120. In some scenarios, the user 110 may be referred to as, e.g., the anchor, streamer or organizer of the live streaming room.

One or more users 130-1, 130-2, ... , 130-N may use their respective terminal devices 140-1, 140-2, ... , 140-N to view the live session and engage in interactions in the live streaming room. For ease of discussion, the users 130 -1, 130 -2, ..., 130-N may be referred to collectively or individually as "user 130", and the terminal devices 140-1, 140-2, ... , 140-N may be referred to collectively or individually as "terminal device 130". In some scenarios, the user 130 may also be referred to as a viewer, audience, viewer side, or participant of the live streaming room.

It should be understood that, although only a single streamer user is shown in FIG. 1, in some embodiments, a live streaming room may include more than one streamer user initiating the live streaming.

In some embodiments, the terminal device 120 and the terminal device 140 may be respectively installed with an application capable of providing a live streaming service, or may access a website capable of providing the live streaming service. The user 110 and the user 130 may operate the terminal device 120 and the terminal device 140 to access a corresponding application or website.

Correspondingly, the terminal device 120 and the terminal device 140 may present a corresponding live streaming interface enabled to, e.g., provide live streaming content in the live streaming room, such as audio live streaming content or video live streaming content.

In some embodiments, the terminal device 120 and the terminal device 140 may further communicate with the server 150 through the network 152 to provide the live streaming service. The server 150 may provide functions such as administration, configuration, and maintenance to the relevant application or website.

The terminal device 120 and the terminal device 140 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an electronic book device, a gaming device, or any combination of the foregoing, including accessories and peripherals of these devices, or any combination thereof. In some embodiments, terminal devices 120, 140 can also support any type of interface for a user (such as a "wearable" circuit, etc.). The server 150 may be any type of computing system/server, including, but not limited to, mainframes, edge computing nodes, computing devices in a cloud environment, and the like, that are capable of providing computational power.

It should be understood that the structures and functions of the various elements in the environment 100 are described for illustrative purposes only, and do not imply any limitation to the scope of the present disclosure.

Various example implementations of the present disclosure will be described in detail below.

### Example Method for Live Streaming Interaction

According to an embodiment of the disclosure, a method for live streaming room interaction is provided. According to the method for interaction, configuration information on an interactive event in a live streaming room by a live streamer is acquired, the configuration information at least indicating a set of users in the live streaming room participating in the interactive event and an order in which the set of users become an active participant in the interactive event. Further, the interactive event in the live streaming room is started according to the configuration information, where, during the interactive event, the display style of the live streaming interface of the live streaming room is dynamically changed according to the configuration information to indicate the change of the active participant in the interactive event.

Such a method for live streaming room interaction may be implemented by a suitable electronic device or a combination of electronic devices (e.g., one or more of the devices in FIG. 1, e.g., the server 150, terminal device 120, and/or terminal device 140). For ease of description, in the following the terminal device 120 and/or the terminal device 140 will be used as an example to describe the method for live streaming room interaction with reference to FIG. 1.

Referring to the example environment of FIG. 1, the live streaming room may include multiple users, such as a user 110, a user 130 -1, a user 130 -2, and so on. As will be described in detail below, the terminal device 120 may, for example, acquire configuration information input by the user 110 about an interactive event (which may also be referred to as an activity) in the live streaming room, and such configuration information may include, for example, text content or other suitable content, to indicate at least a set of users in the live streaming room participating in the interactive event and an order in which the set of users become the active participant in the interactive event. Such configuration information may be acquired by the terminal device 120 in various manners, such as via an operation control, an input portal or the like, in the live streaming room.

Then, the terminal device 120 starts the interactive event in the live streaming room based on the configuration information. For example, the terminal device 140 corresponding to other users 130 (including the set of users to participate in the interactive event and other users viewing the live streaming room) in the live streaming room may also correspondingly start the interactive content in the corresponding live streaming interface.

In some embodiments, the interactive event in the live streaming room may be any online activity allowed in the live streaming room, such as singing, dancing, storytelling, chatting, gaming, etc.. A user participating in the interactive event may, for example, be granted the permission to turn on his/her mic or camera in the live streaming room for sharing audio and/or video contents. That is, the user 110 may configure an interactive event in the live streaming room in terms of, e.g., the quantity, order, duration or the like, for a set of users to participate in the interactive event. The terminal device 120 of the live streamer starts the interactive event in the live streaming room according to the configuration information by the live streamer. It should be noted that, the interactive event of the live streaming room herein may be initiated by the terminal device 120, either upon a manual instruction by the live streamer after the configuration information have been completed, or automatically in response to completion of the configuration information.

In this way, the embodiments of the present disclosure can support multiple users to participate in an interactive event in the live streaming room together, so as to encourage more active interactions among the users in the live streaming room while improving the interaction experience for the users.

The specific process for starting the interactive event in the live streaming room will be discussed in detail below.

### Example Live Streamer Side Interface

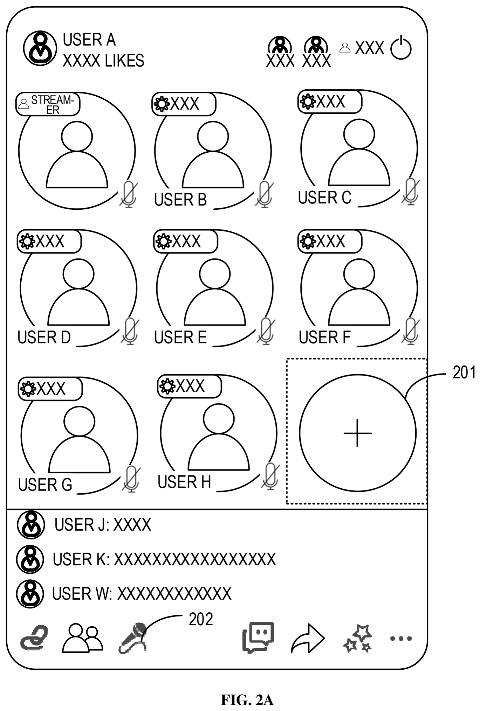

An example live streaming interface according to some embodiments of the present disclosure will be described below in conjunction with FIG. 2A to FIG. 2I. Such a live streaming interface may correspond to, for example, an administrator (e.g., a live streamer) of the live streaming room. FIG. 2A to FIG. 2I illustrate schematic diagrams of multiple example interfaces of the live streaming room according to some embodiments of the present disclosure.

In some embodiments, the live streamer (i.e., the user 110) of the live streaming room may create the interactive event, and then invite multiple users to participate in the interactive event. Certainly, the set of users to participate in the interactive event may also include a user who has actively requested to join the interactive event. The live streaming room may present a user identification (including, e.g., an avatar, an ID, of the user) for each of the set of users participating in the interactive event. As shown in FIG. 2A, the terminal device 120 may, for example, provide the user 110 with a live streaming interface including the user identification for the set of users participating in the interactive event. The live streaming interface includes an invite control 201 for inviting a user to join the interactive event, and a config control 202 for configuring the interactive event. In some embodiments, the config control 202 is presented in the live streaming interface only when the user 110 is creating an interactive event and the live streaming room does contain a set of users that may take part in the interactive event.

In some embodiments, the live streaming interface may further include other controls for interactions in the live streaming room, including, but not limited to, a send gift control, a share control, a comment control, and/or the like. In some embodiments, the live streaming interface further includes a comment area for displaying user comments. It should be understood that the live streaming interface shown in FIG. 2A is merely an example rather than a limitation.

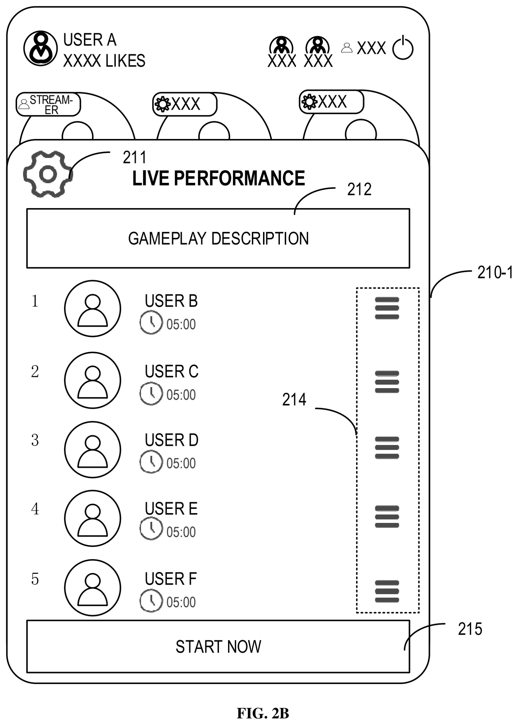

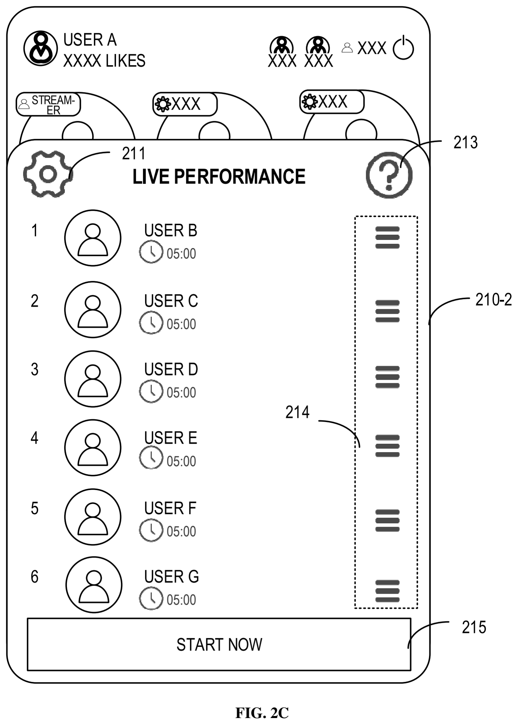

In some embodiments, the terminal device 120 may, in response to receiving a selection operation on the configuration control 202 (including but not limited to a click operation, a long-press operation, a slide operation, a double-click operation, and the like), present a configuration interface 210-1 as shown in FIG. 2B or FIG. 2C. In some embodiments, the terminal device 120 may determine whether the selection operation on the config control 202 is received for the first time, that is, determine whether this is the first time the user 110 creates an interactive event. Specifically, the terminal device 120 may refer to the operation history of the user 110 to determine whether this is the first time the config control 202 receives the selection operation. If determining that this is indeed the first time the config control 202 receives the selection operation, the terminal device 120 may present the configuration interface 210-1 as shown in FIG. 2B. Alternatively, if determining that this is NOT the first time the config control 202 receives the selection operation, the terminal device 120 may present the configuration interface 210-2 as shown in FIG. 2C. In some embodiments, the terminal device 120 may determine whether the selection operation on the config control 202 is received for the first time for the ongoing live streaming, i.e., whether this is the first time, during the current live streaming, that the selection operation is received on the config control 202. In some embodiments, the terminal device 120 may determine whether the selection operation on the config control 202 is received for the first time for all live streaming sessions of the particular user 110.

As shown in FIG. 2B and FIG. 2C, the configuration interface 210-1 and the configuration interface 210-2 both include a set control 211 for determining the configuration information, a start control 215 for initiating an interactive event in the live streaming room, and a plurality of reorder controls 214 for adjusting the order for the set of users to become the active participant in the upcoming interactive event. The configuration interface 210-1 and the configuration interface 210-2 may also display the user identification of the set of users to participate in the interactive event and indexes marking the order for the set of users to become the active participant in the interactive event. In some embodiments, the user identifications of the set of users in the configuration interface are in a one-to-one correspondence with the plurality of reorder controls 214.

In some embodiments, the order for the set of users to become the active participant as displayed in the configuration interface 210-1 and the configuration interface 210-2 are may be the order in which the set of users had joined the interactive event, the order in which the set of users are sorted by name, or the like. An active participant as such may include, e.g., a user having permission to go live and/or share a video in the interactive event.

The user 110 may rearrange this order. Specifically, the terminal device 120 may change, in response to receiving a predetermined operation on a given reorder control 214, the order for a corresponding user to become the active participant. For example, the terminal device 120 may, in response to receiving a drag operation on a specific one (or more) of the plurality of reorder controls 214, rearrange the order for the user corresponding to the specific reorder control 214 to become the active participant in the interactive event.

As shown in FIG. 2B, in some embodiments, in order to guide a user 110 fresh to the task in deciding the configuration information, so that the user 110 may have a clear idea of the rules dictating the interactive event, the configuration interface 210-1 may further include an instruction entry 212 that occupies a relative large area of the interface i.e., more eye-catching. Alternatively, as shown in FIG. 2C, in some embodiments, if the user 110 is identified to be no new to the task of configuring the interactive event, the configuration interface 210-2 may also include an instruction control 213 that occupies a smaller area in the interface, so that the interface may be more concise. It should be noted that the instruction entry 212 and the instruction control 213 are not to be included in the interface at the same time. That is, the terminal device 110 will determine whether to present the configuration interface 210-1 with the instruction entry 212 or the configuration interface 210-2 with the instruction control 213 according to the determination result of whether the selection operation on the configuration control 202 was received for the first time.

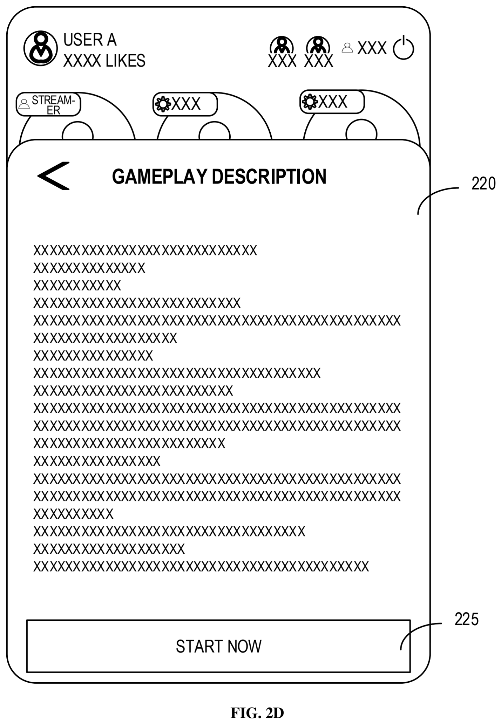

In some embodiments, the terminal device 120 may present an instruction interface 220 shown in FIG. 2D in response to receiving a selection operation on the instruction entry 212 in the configuration interface 210-1 or the instruction control 213 in the configuration interface 210-2. As shown in FIG. 2D, the instruction interface 220 may include guidelines for the interactive event, where the guidelines may be shown in the instruction interface 220 in various forms, such as in the form of texts, images, audios, videos or the like. In some embodiments, the instruction interface 220 further includes a start control 225 for starting an interactive event in the live streaming room.

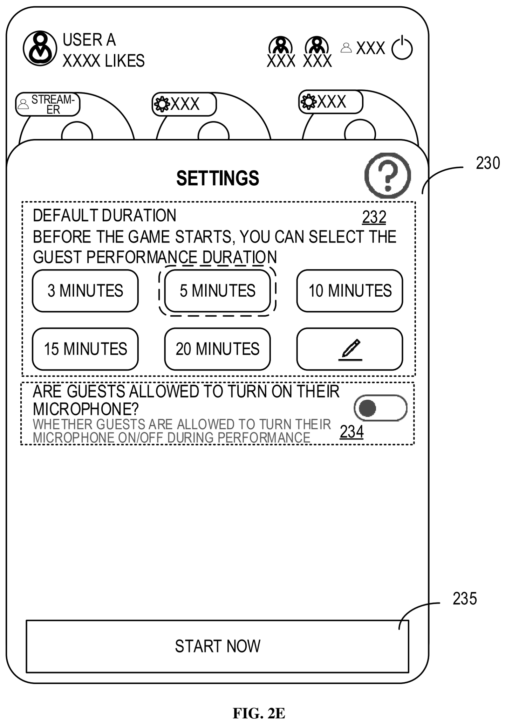

In some embodiments, the terminal device 120 may present a setting interface 230 as shown in FIG. 2E in response to receiving a selection operation in a setting control 211 in the configuration interface 210-1 or the configuration interface 210-2. As shown in FIG. 2E, the terminal device 120 may provide a group of suggested time durations in a duration input area 232 to help the user 110 to choose the maximum time duration allowable for the set of users to become the active participant in the interactive event that they expect to join. For example, the terminal device 120 may, in response to receiving a selection operation by the user 120 on the suggested time duration of 5 minutes, determine that the maximum time duration allowable for the set of users to be the active participant is 5 minutes.

In some embodiments, the terminal device 120 may set the same maximum time duration allowable for all of the set of users to be the active participant in the interactive event. That is, all of them may have the same time duration as set by the user 110 in the duration input area 232.

In addition, as shown in FIG. 2E, the setting interface 230 may further include, for example, a permission configuration area 234 for determining whether a permission to use audio may be granted to the set of users to participate in the interactive event in the live streaming room (the figure has depicted, by way of example, a toggle switch governing whether the guests may control their microphones to illustrate the permission to use the audio), and/or whether permission to use video (not shown) may be granted in the live streaming room. Meanwhile, the setting interface 230 may further include a start control 235 for starting an interactive event in the live streaming room.

In the foregoing, FIG. 2A to FIG. 2E have demonstrated example interfaces for the terminal device 120 to acquire the configuration information from the user 110. The terminal device 120 may determine, by the operations of the user 110 on the interface, the configuration information by the user 110 for the interactive event in the live streaming room, and may start the interactive event in the live streaming room based on the configuration information.

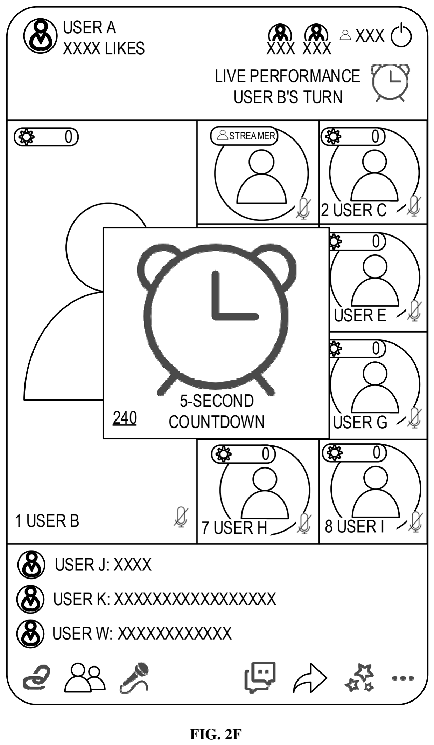

As shown in FIG. 2F, having started the interactive event based on the configuration information, the terminal device 120 may present the area 240 on the live streaming interface. It may prompt the live streamer, i.e., the user 110, in the area 240 the set of users joining the interactive event and other users viewing the live streaming room about the coming live event and a countdown to the event (e.g., 5 seconds). It may be understood that, although the area in FIG. 2F includes an image of a "clock" and a digital countdown, but other visual clues for the impending interactive event may also be included, such as a progress bar, which will not be limited in the present disclosure.

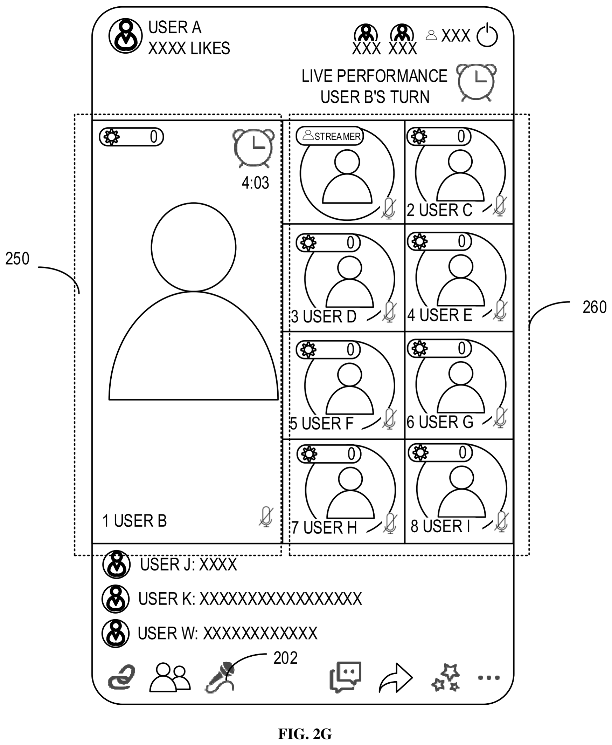

Further, the terminal device 120 may present, as shown in FIG. 2G, a live streaming interface including a first area 250 corresponding to an active participant among the set of users, and a second area 260 corresponding to inactive participants among the set of users. The active participant herein is the one among the set of users in the live streaming room who is currently interacting with other users viewing the live streaming room. For example, if the user B among the set of users participating in the interactive event is currently interacting with other users viewing the live streaming room, then the user B is an active participant. Hence, in the live streaming interface presented by the terminal device 120, the first area 250 includes the user B, and the second area 260 includes inactive participants other than the user B in the set of users and the live streamer side.

In some embodiments, media content from the active participant may be presented in the first area 250, and the user identification of the inactive participant or the media content of the inactive participant in the set of users as specified in the configuration information by the user 110 may be presented in the second area. For example, suppose the user B has become the active participant, then the terminal device 120 may control the preset permission (including the permission to use audio and/or video) of the user B in the live streaming room to be enabled, and control the preset permission of the inactive participant in the set of users to remain disabled. In this case, the media content from the user B is presented in the first area 250, and the user identification of the inactive participant is presented in the second area 260.

In some embodiments, the terminal device 120 may also control the display style of the live streaming interface of the live streaming room to change dynamically based on the configuration information to indicate the change of the active participant in the interactive event, and control the permission information of the live streaming room to change dynamically based on the configuration information. Specifically, the terminal device 120 may present, based on the configuration information input by the user 110 and the order for the predetermined set of users to become the active participant, the media content of the real-time active participant in sequence in the first area 250, and the user identification or the media content of the inactive participants in the second area 260.

In some embodiments, in order to help the user viewing the live streaming room to be able to distinguish more intuitively the active participant the a set of users participating in the interactive event, the first area 250 may have higher display priority in the live streaming interface than the second area 260. For example, the active participant in the first area 250 may have larger display space than all the inactive participants in the second area 260. In addition, the terminal device 120 may also display a text message such as "user B is coming to the show" to remind the users about who is currently becoming the active participant.

In some embodiments, the terminal device 120 may further present, in the live streaming interface, interaction information corresponding to each user in the set of users, where the interaction information is determined based on a preset interactive operation (e.g., like, comment, follow, share, virtual resource interplay and the like) of the live streaming room for the set of users during the interactive event. For example, such interaction information may be quantified into numerical forms.

In some scenarios, because a significant change could happen between the interaction information of different users in the set of users, the interaction information of the set of users participating in the interactive event will all be cleared before the interactive event starts, i.e., the interaction information presented by the terminal device 120 in the live streaming interface is the interaction information of the set of users determined in this interactive event. The interaction information herein may be associated with other users viewing the live streaming room. For instance, the interaction information may be associated with information of virtual resource from the live streaming room viewers to the set of users participating in the interactive event, comment information, like information or the like. It can be understood that, after the current interactive event ends, the interaction information of the set of users will be restored to display both their past interaction information and their new interaction information for the current interactive event, that is, the total interaction information determined for the set of users participating in the plurality of interactive events is displayed.

In some embodiments, after the interactive event is started, the live streaming interface further displays the order for the set of users participating in the interactive event to become the active participant. In some embodiments, the live streaming interface may further present a duration prompt. As shown in FIG. 2G, the terminal device 120 may display a "clock" prompt at the upper right corner of the first area 250, where the prompt further includes the digits "4: 03" to indicate, e.g., the user B is 4 minutes 3 seconds away from becoming the active participant, or the user B has been the active participant for 4 minutes 3 seconds.

In some embodiments, when the current user has been the active participant for the time duration preconfigured by the user 110, the terminal device 120 may automatically switch the current user to become an inactive participant, and switch the next user to be the active participant and present the active participant in the first area 250 based on an order of the set of users to become the active participant as indicated in the configuration information. For example, when the current active participant is user B, and the user that is to become the active participant has been determined to be user C based on the configuration information, then the terminal device 120 may switch the user C to be the active participant in response to the fact that the time duration that the user B being the active participant has reached its predetermined limit (for example, 5 minutes), and present the media content of the user C in the first area 250.

In some embodiments, in addition to switching to an active participant when the duration of being an active participant reaches a pre-configured duration, the terminal device 120 may also switch the current user to be an inactive participant in response to a termination request initiated by the user that is currently the active participant. The terminal device 120 may then switch the next user to become the active participant and present that user in the first area 250 based on the order in which the set of users are to become the active participant as indicated in the configuration information. The termination request may be sent by the current active participant via his or her own terminal device. In some embodiments, the terminal device 120 may also, in response to a switch request of the live streamer, switch the next user to become the active participant based on the order for the set of users to become the active participant as indicated in the configuration information, and present that active participant in the first area 250.

In some embodiments, in order to improve the user's interaction experience, the terminal device 110 may also present, in the live streaming interface, a first reminder indicating that the time limit of the currently active participant is about to expire, and a second reminder indicating that the next user is about to become the active participant. The reminder herein may be presented in the live streaming interface in various forms, such as text, image, vocal, buzz, and the like. For example, the terminal device 110 may re-use the area 240 in the live streaming interface to remind that the time limit of the current user is about to expire.

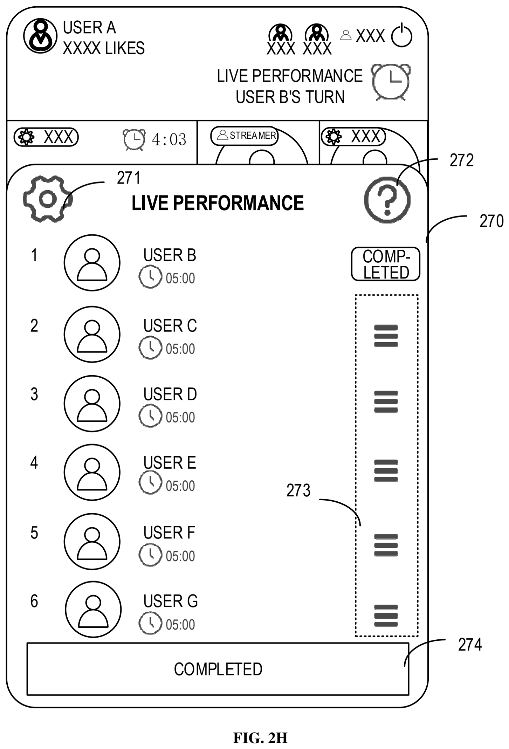

In some embodiments, after the interactive event begins, the terminal device 120 may further present, in response to receiving a selection operation on the config control 202, the configuration interface 270 shown in FIG. 2H. The configuration interface 270 may display a set of users participating in the interactive event based on the order indicated in the configuration information as predetermined by the user 110. The configuration interface 270 includes a set control 271 for determining the configuration information, an instruction control 272 for assisting the user 110 in understanding the rules for the interaction, a plurality of reorder controls 273 for rearranging the order for the set of users participating in the interactive event to become the active participant in the interactive event, and a finish control 274 for concluding the configuration. The terminal device 120 may rearrange, in response to receiving a predetermined operation on a certain reorder control 274, the order in which the user corresponding to the reorder control 274 to become the active participant. In some embodiments, as shown in FIG. 2H, the reorder control 274 corresponding the user who is a former active participant may turn into a "participated" state for indicating that the user finished his or her turn of being the active participant and cannot be rearranged anymore. The terminal device 120 may, in response to receiving a selection operation on the finish control 274, determine that the user 110 has concluded modifying the configuration information, and hence cease to present the configuration interface 270.

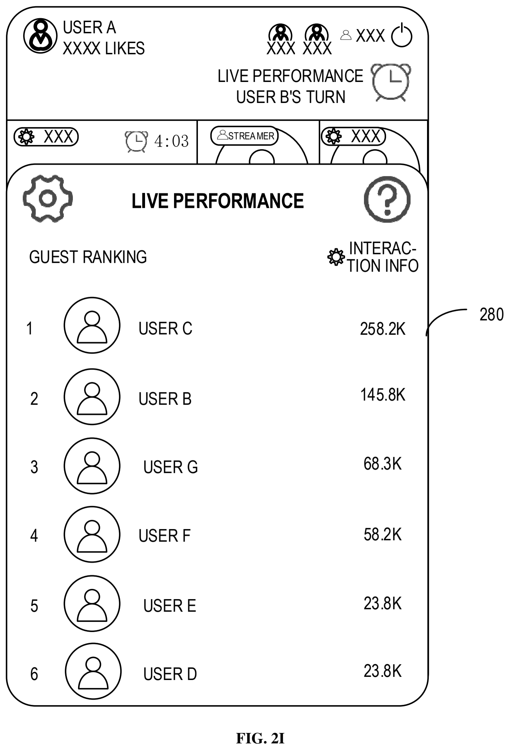

In some embodiments, in the live streaming interface on the live streamer side, the terminal device 120 may further present, in response to a first preset operation of the live streamer, i.e., the user 110, a statistics area 280 as shown in FIG. 2I after the interactive event has concluded. The statistics area 280 may be used to present a ranking of the interaction information of the set of users participated in the interactive event. The terminal device 120 may rank the set of users participated in the interactive event according to relevant data in the interaction information, and present the ranking result in the statistics area 280.

By means of the foregoing, the live streamer can configure the set of users participating in the interactive event of the live streaming room, thereby ensuring the interaction experience of the user in the live streaming room.

### Example Interface for User Side

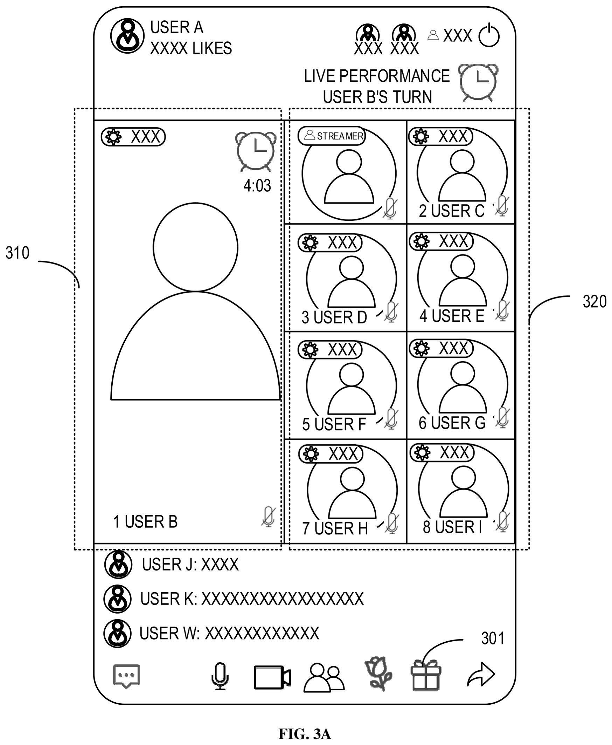

Next, an interaction process of a set of users participating in an interactive event in a live streaming room will be discussed below with reference to FIG. 3A to FIG. 3C. The FIG. 3A to FIG. 3C illustrate schematic diagrams of multiple example interfaces according to some embodiments of the present disclosure.

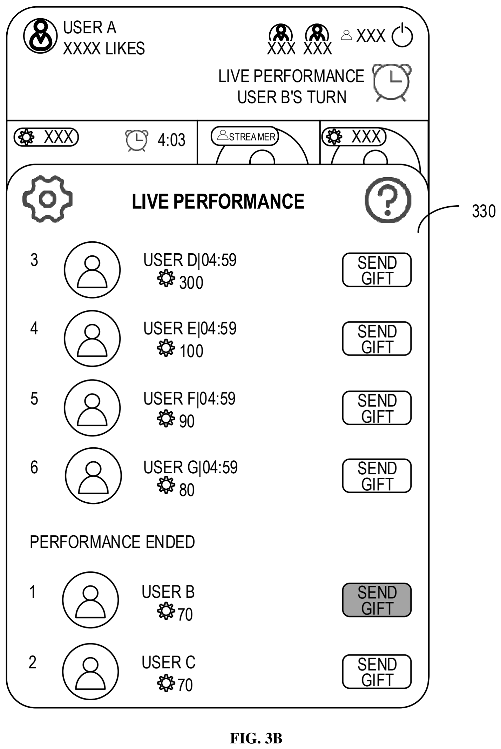

In some embodiments, for the set of users participating in the interactive event of the live streaming room, their corresponding terminal devices 140 may provide them with the live streaming interface as shown in FIG. 3A. As depicted in FIG. 3A, similar to the live streaming interface on the live streamer side, the live streaming interface of the set of users also includes a first area 310 for presenting an active participant and a second area 320 for presenting inactive participants. The live streaming interface of the set of users may also present interaction information of the set of users participating in the interactive event. In addition, the live streaming interface of the set of users also includes multiple interaction controls for participating in the interaction of the live streaming room. In some embodiments, the terminal device 140 may present the interactive interface 330 as shown in FIG. 3B in response to receiving a selection operation on a send gift control 301 (of course, this is merely an example, and other controls are also possible) among the plurality of interaction controls.

As shown in FIG. 3B, a user who is a former active participant may be displayed in the interactive interface 330 separately from other users in the set of users who are yet to become the active participant. For example, a user who is a former active participant is displayed at the bottom of the interface, and a user who is yet to become the active participant is displayed at the top. The interactive interface 330 may further include multiple "send virtual resource" buttons, and the terminal device 140 may determine, in response to receiving a click operation on the "send virtual resource" button, a virtual resource to be granted to the user corresponding to the button and update the interaction information of the user receiving the virtual resource. In some embodiments, the set of users participating in the interactive event may only grant virtual resources to users other than themselves, and cannot give themselves any virtual resource.

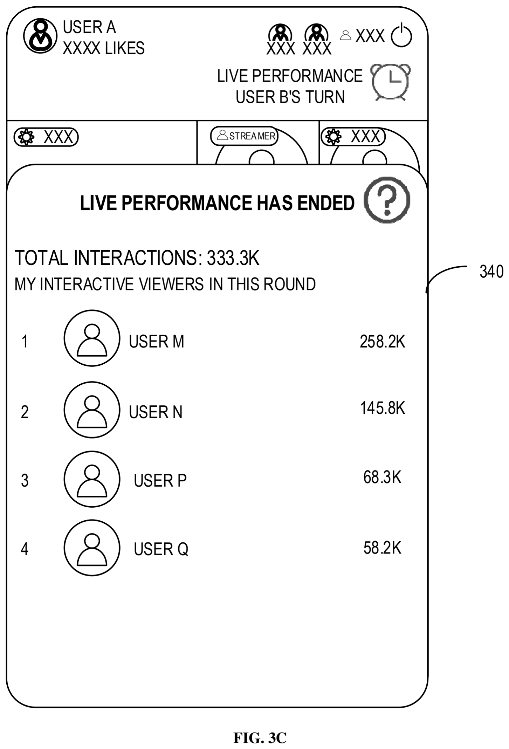

In some embodiments, in a live streaming interface of the set of users participating in the interactive event, the terminal device 140 may further present, in response to a second preset operation by a specific user (that is, any one among the set of users participating in the interactive event), a statistics area 340 as shown in FIG. 3C after the interactive event ends. The statistics area 340 may be configured to present at least one participant who initiated a preset interactive operation on the specific user in the live streaming room during the interactive event, where the preset interactive operation includes, but is not limited to, sending virtual resource, liking, commenting and the like. For example, the statistics area 340 may present at least one user viewing the live streaming room that has engaged in the preset interactive operation with the specific user during the interaction process. The terminal device 140 may rank the users according to the preset interactive operation, and present the ranking result in the statistics area 340. For example, assuming the preset interactive operation to be sending virtual resource, then the terminal device 140 may rank the viewers according to the values associated with the virtual resource granted on the specific user by the viewers in the live streaming room, and present the ranking result in the statistics area 340.

This helps the set of users in the interactive event of the live streaming room to directly see in their own terminal devices 140 the list of followers who had interacted with them, thereby improving the interaction experience for the set of users.

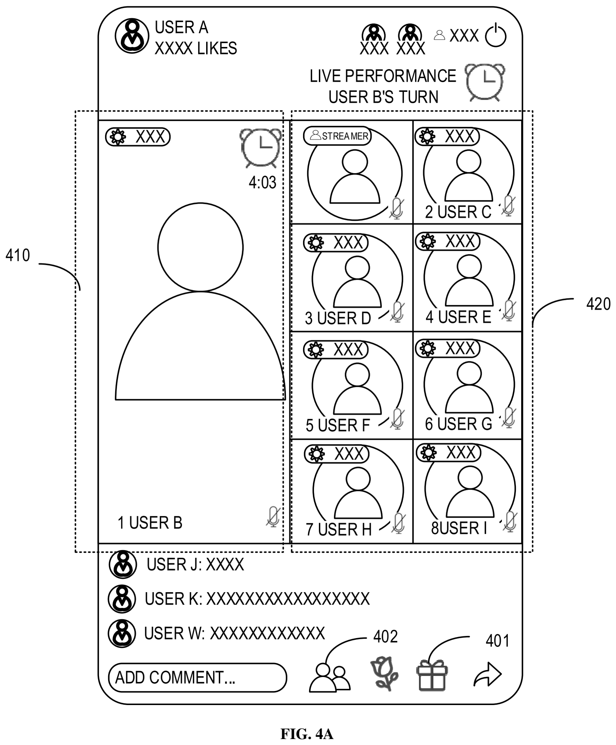

Next, an interaction process of a set of users participating in an interactive event in a live streaming room will be discussed with reference to FIG. 4A to FIG.4D. The FIG. 4A to FIG.4D illustrate schematic diagrams of multiple example interfaces according to some embodiments of the present disclosure.

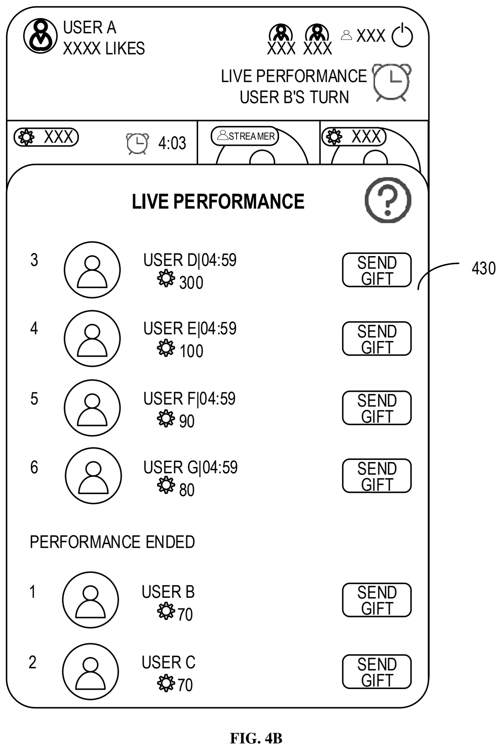

In some embodiments, a user viewing the live streaming room (that is, an viewer user) may be provided on a corresponding terminal device 140 with a live streaming interface as shown in FIG. 4A. As depicted in FIG. 4A, the live streaming interface of the viewer user also includes a first area 410 for presenting active participants and a second area 420 for presenting inactive participants. The live streaming interface of the viewer user may also present interaction information of the set of users participating in the interactive event. In addition, the live streaming interface of the viewer user also includes multiple interaction controls for participating in the interaction of the live streaming room. In some embodiments, the terminal device 140 may present the interactive interface 430 as shown in FIG. 4B in response to receiving a selection operation on a send gift control 401 (of course, this is merely an example, and there may also be other controls) among the plurality of interaction controls.

As shown in FIG. 4B, in the interactive interface 430, a user who is a former active participant may be displayed separately from other users in the set of users who is not yet the active participant. For example, a user who is a former active participant is displayed to at bottom of the interface, while a user who is not is displayed at the top. The interactive interface 430 may further include multiple "send virtual resource" buttons, and the terminal device 140 may determine on, in response to receiving a click operation on the "send virtual resource" button, a virtual resource to be granted to the user corresponding to the button and update the interaction information of the user receiving the virtual resource.

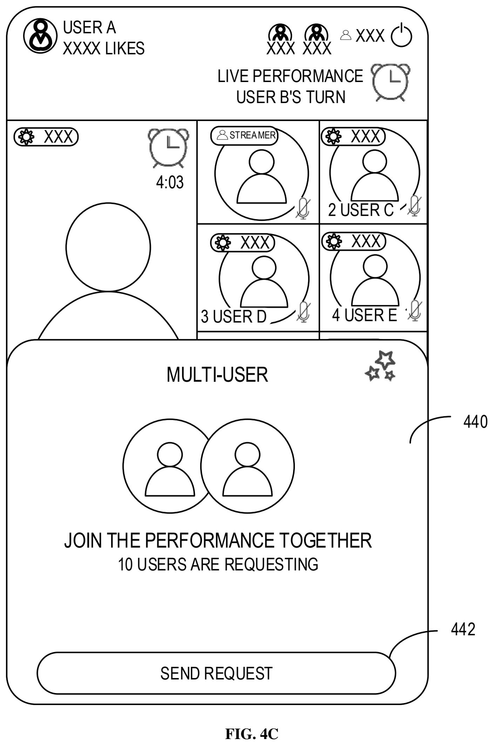

In some embodiments, the terminal device 140 may further display a request interface 440 as shown in FIG. 4C in response to receiving a selection operation on the live co-stream control 402 (of course, this is merely an example, and other controls are also possible) among the plurality of controls. The request interface 440 may present a number of users, such as 10 users, currently requesting to join the live interaction. The request interface 440 may also present prompt information for prompting the user about the interactive event. The request interface 440 also includes a control 442. The terminal device 140 may determine, in response to receiving the selection operation on the control 442, that a request initiated by a user to join the interactive event is received, and the terminal device 140 may send the request to the server 150, and then forward the request to the terminal device 120 on the live streamer side. In some embodiments, the terminal device 120 on the live streamer side may update the configuration information by the live streamer on the interactive event in response to receiving a confirmation by the live streamer to the request to join. In some embodiments, the user who newly joined the interactive event will be set to be the last active participant by default. The terminal device 120 may rearrange, in response to receiving a modification to the configuration information by the user 110, the order for the user joining the interactive event to become the active participant. In some embodiments, the user who lately joins the interactive event would have the same maximum allowable time duration for being the active participant and the same preset permission as the set of users who were already in the interactive event.

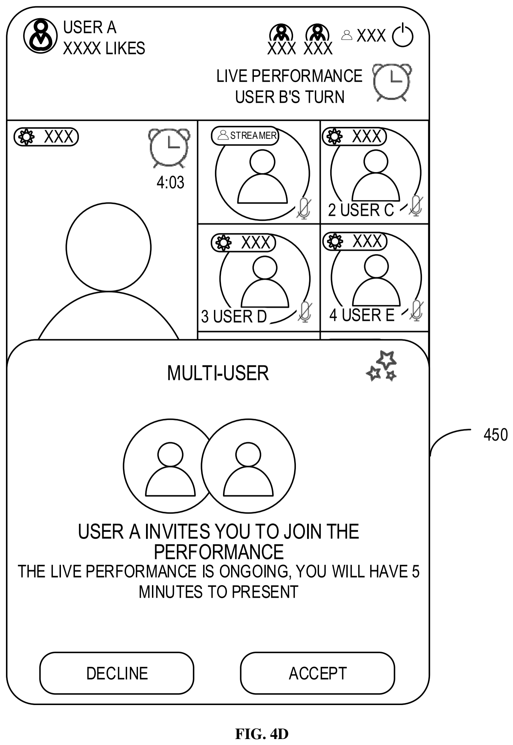

In some embodiments, the terminal device 140 may further present the invitation interface 450 as shown in FIG. 4D when receiving an invitation request indicating a chance to join an interactive event. The invitation request here may be initiated by the live streamer of the live streaming room, that is, the user 110. After receiving the invitation request initiated by the user 110, the terminal device 120 corresponding to the user 110 may send the invitation request to the terminal device 140 through the server 150. The invitation interface 450 may include an "accept" button indicating an accept of the invitation, and a "decline" button indicating a decline to the invitation. The terminal device 140 may determine that the current user desires to join the interactive event in response to receiving a click operation on the "accept" button. Similarly, the user who joins the interactive event the latest would be arranged, by defaults, to the last active participant. The terminal device 120 may rearrange, in response to receiving a modification to the configuration information by the user 110, the order for the user lately joined the interactive event to become the active participant. In some embodiments, the user who lately joins the interactive event would have the same maximum allowable time duration for being an active participant and the same preset permission as the set of users who were already in the interactive event.

Based on the process described above, on one hand, the live streamer side of the live streaming room can easily and conveniently decide on the configuration information of the interactive event, hence improving the operation efficiency on the live streamer side. On the other hand, a set of users participating in the interactive event of the live streaming room may be joined by other users viewing the live streaming room in enjoying the interactive event of the live streaming room, thereby helping improve the interaction experience of the user.

### Example Processes

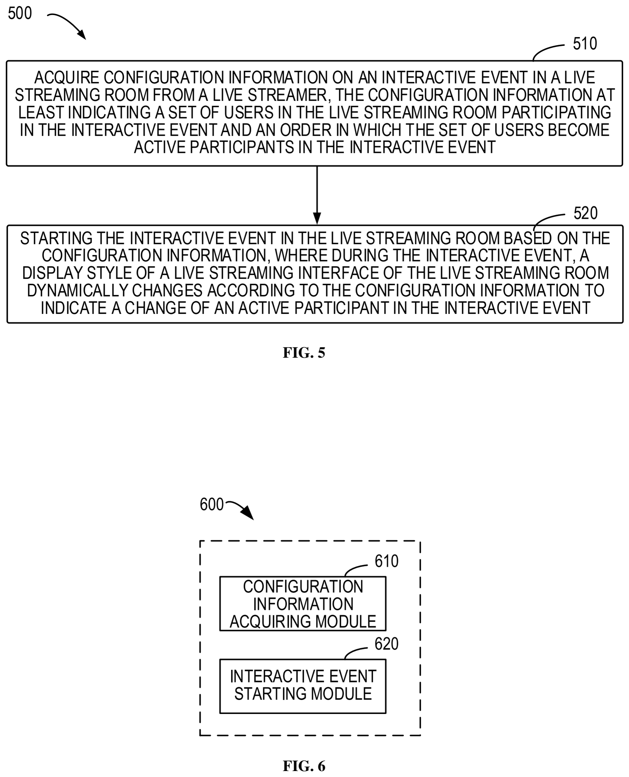

FIG. 5 shows a flowchart of a process 500 for interacting within a live streaming room according to some embodiments of the present disclosure. The process 500 may be implemented, for example, by the terminal device 120 in FIG. 1. The terminal device 120 may be, for example, a terminal device on a live streamer side, a terminal device on an active participant side, or a terminal device of a viewer user in a live streaming room. Now, the process 500 will be described below with additional reference to FIG. 1.

At block 510, the terminal device 120 acquires configuration information on an interactive event in a live streaming room from a live streamer, the configuration information at least indicating a set of users in the live streaming room participating in the interactive event and an order in which the set of users become the active participant in the interactive event.

At block 520, the terminal device 120 starts the interactive event in the live streaming room based on the configuration information, where during the interactive event, a display style of a live streaming interface of the live streaming room dynamically changes based on the configuration information to indicate a change of an active participant in the interactive event.

In some embodiments, the process 500 further includes: controlling the permission information of the live streaming room to dynamically change based on the configuration information, where in response to a target user among the set of users becoming the active participant among the set of users, a first preset permission for the target user in the live streaming room is enabled.

In some embodiments, the first preset permission includes a permission to use audio in the live streaming room and/or a permission to use video in the live streaming room.

In some embodiments, the configuration information further indicates a set of time durations corresponding to a set of users, where the set of time durations indicate maximum time durations for which the set of users are allowed to be the active participant.

In some embodiments, the set of users includes a first user, the first user corresponds to a first time duration, and, in response to the first time duration corresponding to the first user expiring, the active participant in the live streaming rooms is automatically switched from the first user to the second user based on the order.

In some embodiments, before the first time duration expires, the live streaming interface presents: a first reminder that the first time duration corresponding to the first user is about to expire, and/or a second reminder that the second user is about to become the active participant.

In some embodiments, during the interactive event, if the third user who currently is an active participant in the live streaming initiates a termination request, the active participant in the live streaming room is automatically switched from the third user to a fourth user based the order.

In some embodiments, the configuration information further indicates whether a second preset permission of an inactive participant among the set of users in the live streaming room is enabled during the interactive event.

In some embodiments, the live streaming interface includes a first area corresponding to the active participant among the set of users, and a second area corresponding to an inactive participants among the set of users, where the display style indicates that a display priority of the first area in the live streaming interface is higher than that of the second area.

In some embodiments, the first area is configured to present media content from the active participant.

In some embodiments, the live streaming interface further presents interaction information corresponding to each user in the set of users, and the interaction information is determined based on a preset interactive operation in the live streaming room for the set of users during the interactive event.

In some embodiments, the live streaming interface corresponds to the live streamer among the set of users, and the live streaming interface is further configured to: present, based on a first preset operation of the live streamer, a first statistics area after the interactive event ends, the first statistics area configured to present a ranking of the interaction information of a set of users.

In some embodiments, the live streaming interface corresponds to a specific user among the set of users, and the live streaming interface is further configured to: present, based on a second preset operation of the specific user, a second statistics area after the interactive event ends, the interaction statistics area configured to present at least one participant that initiated the preset interactive operation for the specific user in the live streaming room during the interactive event.

In some embodiments, the process 500 further includes: receiving a third preset operation indicating that a fifth user is invited to join the interactive event by the live streamer; and causing a terminal device associated with the fifth user to present an invitation to join the interactive event.

In some embodiments, the process 500 further includes: presenting, in response to a sixth user initiating a join request for joining the interactive event, a reminder corresponding to the join request to the live streamer; and updating, in response to receiving an acknowledgement for the join request, the configuration information for the interactive event.

### Example Apparatus and Apparatus

FIG. 6 illustrates a schematic structural block diagram of an apparatus 600 for live streaming room interaction according to some embodiments of the present disclosure. The apparatus 600 may be, e.g., included in the terminal device 120 in FIG. 1. The various modules/components in the apparatus 600 may be implemented by hardware, software, firmware, or any combination thereof.

As depicted, the apparatus 600 includes a configuration information acquiring module 610, configured to acquire configuration information on an interactive event in a live streaming room from a live streamer, the configuration information at least indicating a set of users in the live streaming room participating in the interactive event and an order in which the set of users become the active participant in the interactive event. The apparatus 600 further includes an interactive event starting module 620, configured to start interactive event in the live streaming room based on the configuration information, where during the interactive event, a display style of a live streaming interface of the live streaming room dynamically changes based on the configuration information to indicate a change of an active participant in the interactive event.

In some embodiments, the apparatus 600 further includes: a permission information changing module, configured to control permission information of the live streaming room to dynamically change based on the configuration information, where in response to a target user among the set of users becoming the active participant among the set of users, a first preset permission for the target user in the live streaming room is enabled.

In some embodiments, the first preset permission includes a permission to use audio in the live streaming room and/or a permission to use video in the live streaming room.

In some embodiments, the configuration information further indicates a set of time durations corresponding to the set of users, where the set of time durations indicate maximum time durations for which the set of users are allowed to be the active participant.

In some embodiments, the set of users includes a first user, the first user corresponds to a first time duration, and, in response to the first time duration corresponding to the first user expiring, the active participant in the live streaming room is automatically switched from the first user to a second user based on the order.

In some embodiments, before the first time length expires, the live streaming interface presents: a first reminder that the first time duration corresponding to the first user is about to expire, and/or a second reminder that the second user is about to become the active participant.

In some embodiments, during the interactive event, if a third user who is currently the active participant in the live stream initiates a termination request, the active participant in the live streaming room is automatically switched from the third user to a fourth user based on the order.

In some embodiments, the configuration information further indicates whether a second preset permission for an inactive participant among the set of users in the live streaming room is enabled during the interactive event.

In some embodiments, the live streaming interface includes a first area corresponding to the active participant among the set of users, and a second area corresponding to an inactive participant among the set of users, where the display style indicates that a display priority of the first area in the live streaming interface is higher than that of the second area.

In some embodiments, the first area is configured to present media content from the active participant.

In some embodiments, the live streaming interface further presents interaction information corresponding to each user among the set of users, and the interaction information is determined based on a preset interactive operation in the live streaming room for the set of users during the interactive event.

In some embodiments, the live streaming interface corresponds to a live streamer among the set of users, and the live streaming interface is further configured to: present, based on a first preset operation of the live streamer, a first statistics area after the interactive event ends, the first statistics area configured to present a ranking of the interaction information of the set of users.

In some embodiments, the live streaming interface corresponds to a specific user among the set of users, and the live streaming interface is further configured to: present, based on a second preset operation of the specific user, a second statistics area after the interactive event ends, the interaction statistics area configured to present at least one participant that initiate the preset interactive operation for the specific user in the live streaming room during the interactive event.

In some embodiments, the apparatus 600 further includes: a third operation receiving module, configured to receive a third preset operation indicating that a fifth user is invited to join the interactive event by the live streamer; and an invitation presenting module, configured to cause a terminal device associated with the fifth user to present an invitation to join the interactive event.

In some embodiments, the apparatus 600 further includes: a reminder presenting module, configured to present, in response to a sixth user initiating a join request for joining the interactive event, a reminder corresponding to the join request to the live streamer; and an information updating module, configured to update, in response to receiving an acknowledgement for the join request, the configuration information for the interactive event.

The units included in the apparatus 600 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the units in the apparatus 600 may be implemented, at least in part, by one or more hardware logic components. By way of example and not limitation, example types of hardware logic components that may be used include field programmable gate arrays (FPGAs), application specific integrated circuits (ASICs), application specific standard products (ASSPs), system-on-a-chips (SOCs), complex programmable logic devices (CPLDs), and the like.

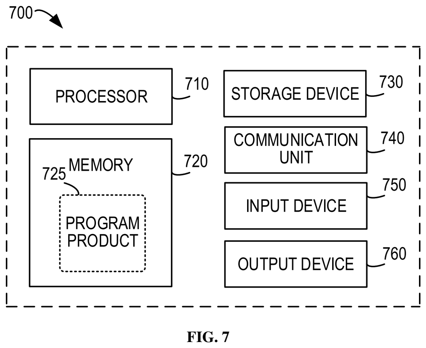

FIG. 7 illustrates a block diagram of an electronic device 700 in which one or more embodiments of the present disclosure may be implemented. It should be understood that the electronic device 700 illustrated in FIG. 7 is merely an example and should not constitute any limitation on the functionality and scope of the embodiments described herein.

As shown in FIG. 7, the electronic device 700 is in the form of a general-purpose electronic device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor, and is capable of performing various processes according to programs stored in the memory 720. In a multiprocessor system, multiple processing units execute computer-executable instructions in parallel to improve parallel processing capabilities of the electronic device 700.

The electronic device 700 typically includes multiple computer storage media. Such media may be any available media accessible to the electronic device 700, including, but not limited to, volatile and non-volatile media, removable and non-removable media. The memory 720 may be a volatile memory (e.g., a register, a cache, a random access memory (RAM)), a non-volatile memory (e.g., a read-only memory (ROM), an electrically erasable programmable read-only memory (EEPROM), a flash memory), or a combination thereof. The storage device 730 may be a removable or non-removable medium, and may include a machine-readable medium, such as a flash drive, magnetic disk, or any other medium, which may be capable of storing information and/or data (e.g., training data for training) and may be accessed within electronic device 700.

The electronic device 700 may further include additional removable/non-removable, volatile/non-volatile storage media. Although not shown in FIG. 7, a disk drive for reading or writing from a removable, nonvolatile magnetic disk (e.g., a "floppy disk") and an optical disk drive for reading or writing from a removable, nonvolatile optical disk may be provided. In these cases, individual drives may be connected to a bus (not shown) via one or more data media interfaces. The memory 720 may include a computer program product 725 having one or more program modules configured to perform various methods or actions of various embodiments of the present disclosure.

The communication unit 740 is configured to communicate with other electronic devices through a communication medium. Additionally, the functionality of components of the electronic device 700 may be implemented in a single computing cluster or multiple computing machines capable of communicating over a communication connection. Thus, the electronic device 700 may operate in a networked environment using logical connections with one or more other servers, network personal computers (PCs), or another network node.

The input device 750 may be one or more input devices such as a mouse, a keyboard, a trackball, or the like. The output device 760 may be one or more output devices, such as a display, a speaker, a printer, or the like. The electronic device 700 may also communicate with one or more external devices (not shown), e.g., external devices such as storage devices, display devices, etc., through the communication unit 740 as needed, or communicate with one or more devices that enable a user to interact with the electronic device 700, or communicate with any device (e.g., a network adapter, a modem, etc. ) that enables the electronic device 700 to communicate with one or more other electronic devices. Such communication may be performed via an input/output (I/O) interface (not shown).

According to example implementations of the present disclosure, there is provided a computer-readable storage medium having computer-executable instructions stored thereon, where the computer-executable instructions are executed by a processor to implement the methods described above. According to example implementations of the present disclosure, a computer program product is further provided, the computer program product being tangibly stored on a non-transitory computer-readable medium and including computer-executable instructions that are executed by a processor to implement the methods described above.

Aspects of the present disclosure are described herein with reference to flowcharts and/or block diagrams of methods, apparatuses, devices, and computer program products implemented in accordance with the present disclosure. It should be understood that each block in the flowchart and/or block diagram, and combinations of blocks in the flowcharts and/or block diagrams, may be implemented by computer readable program instructions.

These computer-readable program instructions may be provided to a processing unit of a general purpose computer, a special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that causes the computer, programmable data processing apparatus, and/or other devices to function in a particular manner, such that the computer-readable medium storing instructions includes an article of manufacture including instructions to implement aspects of the functions/acts specified in the flowchart and/or block diagram.

The computer-readable program instructions may be loaded onto a computer, other programmable data processing apparatus, or other device, such that a series of operational steps are performed on the computer, other programmable data processing apparatus, or other device to produce a computer-implemented process such that the instructions executed on the computer, other programmable data processing apparatus, or other device implement the functions/acts specified in one or more blocks in the flowchart and/or block diagram.

The flowchart and block diagrams in the drawings have shown architecture, functionality, and operation of possible implementations of systems, methods, and computer program products according to various implementations of the present disclosure. In this regard, one block in the flowchart or block diagram may represent a module, program segment, or portion of an instruction that includes one or more executable instructions for implementing the specified logical function. In some alternative implementations, the functions noted in the blocks may also occur in a different order than noted in the drawings. For example, two consecutive blocks may actually be performed substantially in parallel, or sometimes be performed in a reversed order, depending on the functionality involved. It is also noted that individual blocks in the block diagrams and/or flowchart, as well as combinations of multiple blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not intended to limit the implementations disclosed. Many modifications and variations will be apparent to those of ordinary skill in the art without departing from the scope and spirit of the various implementations illustrated. The selection of the terms used herein is solely intended to best explain the principles of the implementations, practical applications, or improvements to technologies in the marketplace, or to enable others of ordinary skill in the art to understand the various implementations disclosed herein.

## Claims

1. A method for live streaming room interaction, comprising:
acquiring configuration information on an interactive event in a live streaming room from a live streamer, the configuration information at least indicating a set of users in the live streaming room participating in the interactive event and an order in which the set of users become an active participant in the interactive event; and
starting the interactive event in the live streaming room based on the configuration information, wherein, during the interactive event, a display style of a live streaming interface of the live streaming room dynamically changes based on the configuration information to indicate a change of an active participant in the interactive event.

2. The method of claim 1, further comprising:
controlling permission information of the live streaming room to dynamically change based on the configuration information, wherein in response to a target user among the set of users becoming the active participant among the set of users, a first preset permission for the target user in the live streaming room is enabled.

3. The method of claim 2, wherein the first preset permission comprises:
a permission to use audio in the live streaming room, and/or
a permission to use video in the live streaming room.

4. The method of claim 1, wherein the configuration information further indicates a set of time durations corresponding to the set of users, wherein the set of time durations indicate maximum time durations for which the set of users are allowed to be the active participant.

5. The method of claim 4, wherein the set of users comprise a first user corresponding to a first time duration, and
automatically switching, in response to the first time duration corresponding to the first user expiring, the active participant in the live streaming room from the first user to a second user based on the order.

6. The method of claim 5, wherein before the first time duration expires, the live streaming interface presents:
a first reminder that the first time duration corresponding to the first user is about to expire, and/or
a second reminder that the second user is about to become the active participant.

7. The method of claim 1, wherein during the interactive event, if a third user who is currently the active participant in the live stream initiates a termination request, the active participant in the live streaming room is automatically switched from the third user to a fourth user based on the order.

8. The method of claim **1,** wherein the configuration information further indicates whether a second preset permission for an inactive participant among the set of users in the live streaming room is enabled during the interactive event.

9. The method of claim **1,** wherein the live streaming interface comprises a first area corresponding to the active participant among the set of users, and a second area corresponding to an inactive participant among the set of users,
wherein the display style indicates that a display priority of the first area in the live streaming interface is higher than that of the second area.

10. The method of claim 9, wherein the first area is configured to present media content from the active participant.

11. The method of claim 1, wherein the live streaming interface further presents interaction information corresponding to each user among the set of users, and the interaction information is determined based on a preset interactive operation in the live streaming room for the set of users during the interactive event.

12. The method of claim 11, wherein the live streaming interface corresponds to the live streamer among the set of users, and the live streaming interface is further configured to:
presenting, based on a first preset operation of the live streamer, a first statistics area after the interactive event ends, the first statistics area configured to present a ranking of the interaction information of the set of users.

13. The method of claim 11, wherein the live streaming interface corresponds to a specific user among the set of users, and the live streaming interface is further configured to:
presenting, based on a second preset operation of the specific user, a second statistics area after the interactive event ends, the interaction statistics area configured to present at least one participant that initiate the preset interactive operation for the specific user in the live streaming room during the interactive event.

14. The method of claim **1,** further comprising:
receiving a third preset operation indicating that a fifth user is invited to join the interactive event by the live streamer; and
causing a terminal device associated with the fifth user to present an invitation to join the interactive event.

15. The method of claim **1,** further comprising:
presenting, in response to a sixth user initiating a join request for joining the interactive event, a reminder corresponding to the join request to the live streamer; and
updating, in response to receiving an acknowledgement for the join request, the configuration information for the interactive event.

16. An apparatus for live streaming room interaction, comprising:
a configuration information acquiring module, configured to acquire configuration information on an interactive event in a live streaming room from a live streamer, the configuration information at least indicating a set of users in the live streaming room participating in the interactive event and an order in which the set of users become an active participant in the interactive event; and
an interactive event starting module, configured to start interactive event in the live streaming room based on the configuration information, wherein during the interactive event, a display style of a live streaming interface of the live streaming room dynamically changes based on the configuration information to indicate a change of an active participant in the interactive event.

17. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1-15.

18. A computer-readable storage medium having stored thereon a computer program, the computer program, when executed by a processor, implements the method of any of claims 1-15.
